# EUROPEAN PATENT APPLICATION

(11) **EP 4 685 912 A1**
(43) Date of publication of application: **28.01.2026**
(21) Application number: 25160375.9
(22) Date of filing: 26.02.2025
(51) Int. Cl.: H01M 10/0585, H01M 50/474, H01M 50/486

(54) **SECONDARY BATTERY**

(30) Priority: 23.07.2024 KR 20240097384
(71) Applicant: SAMSUNG SDI CO., LTD., Yongin-si, Gyeonggi-do 17084 (KR)
(72) Inventor: KIM, Bumrae, Yongin-si, Gyeonggi-do 17084 (KR); KIM, Dahyun, Yongin-si, Gyeonggi-do 17084 (KR)
(74) Representative: Marks & Clerk LLP

(57) **Abstract**

A secondary battery includes: an electrode assembly including: a first electrode plate on which a first electrode tap is located; a second electrode plate on which a second electrode tap is located; and a separator between the first electrode plate and the second electrode plate; fillers on a front surface of the electrode assembly; and a case accommodating the electrode assembly. The electrode assembly has a first surface and a second surface at an outmost edge, and facing the case in a stacking direction of the electrode assembly. At least one of the first surface or the second surface includes a central region where a thickness of the electrode assembly is constant, and edge regions other than the central region, and the fillers are located in the edge regions.

## Description

### BACKGROUND

### 1. Field

The present disclosure relates to a secondary battery.

### 2. Description of the Related Art

Unlike primary batteries that are not designed to be (re)charged, secondary (or rechargeable) batteries are batteries that are designed to be discharged and recharged. Lowcapacity secondary batteries are used in portable, small electronic devices, such as smart phones, feature phones, notebook computers, digital cameras, and camcorders, while largecapacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A positive electrode and a negative electrode may include a mixture, such as an active material, a binder, and a conductive material. A volume of an electrode assembly may be changed by chemicals forming the positive electrode and the negative electrode during charge and discharge.

The chemicals forming the positive electrode and the negative electrode may expand, and thus, a thickness of the electrode assembly may not be constant. If (e.g., when) the thickness of the electrode assembly is not constant, resistance imbalances may be caused. As a result, salt may be precipitated, which may degrade the safety of the battery.

The above information disclosed in this Background section is for enhancement of understanding of the background of the present disclosure, and therefore, it may contain information that does not constitute related (or prior) art.

### SUMMARY

One or more embodiments of the present disclosure may be directed to a secondary battery having improved safety.

One or more embodiments of the present disclosure may be directed to a secondary battery for providing a uniform or substantially uniform pressure on an electrode assembly.

These and other aspects and features of the present disclosure will be described in or will be apparent from the following description of embodiments of the present disclosure.

According to one or more embodiments of the present disclosure, a secondary battery includes: an electrode assembly including: a first electrode plate on which a first electrode tap is located, e.g. formed; a second electrode plate on which a second electrode tap is located, e.g. formed; and a separator between, e.g. interposed between, the first electrode plate and the second electrode plate; fillers on, e.g. disposed on, a front surface of the electrode assembly; and a case accommodating the electrode assembly. The electrode assembly has a first surface and a second surface at an outmost edge, and facing the case in a stacking direction of the electrode assembly. At least one of the first surface or the second surface includes a central region where a thickness of the electrode assembly is constant, and edge regions other than the central region, and the fillers are located, e.g. disposed, in the edge regions.

In an embodiment, the first electrode plate may be a positive electrode plate, and the second electrode plate may be a negative electrode plate.

In an embodiment, a length of the second electrode plate may be greater than a length of the first electrode plate.

In an embodiment, a height of the second electrode plate may be greater than a height of the first electrode plate.

In an embodiment, the central region may be positioned and/or located inside the first electrode plate.

In an embodiment, a separation distance from one side of the first electrode plate to the central region may be greater than a separation distance from another side of the first electrode plate to the central region, the one side of the first electrode plate corresponding to a first side of the first electrode plate on which the first electrode tap is located, e.g. disposed, and the other side of the first electrode plate corresponding to a second side of the first electrode plate on which the first electrode tap is not located, e.g. disposed.

In an embodiment, a separation distance from one side of the second electrode plate to the central region may be greater than a separation distance from another side of the second electrode plate to the central region, the one side of the second electrode plate corresponding to a first side of the second electrode plate on which the second electrode tap is located, e.g. disposed, and the other side of the second electrode plate corresponding to a second side of the second electrode plate on which the second electrode tap is not located, e.g. disposed.

In an embodiment, the first electrode tap and the second electrode tap may be located, e.g. disposed, on different side surfaces of the electrode assembly from each other.

In an embodiment, the first electrode tap and the second electrode tap may be located, e.g. disposed, on the same side surface of the electrode assembly as each other.

In an embodiment, a separation distance from one side of the second electrode plate to the central region may be 0 mm to 10 mm, the one side of the second electrode plate corresponding to a first side of the second electrode plate on which the second electrode tap is located.

In an embodiment, the case may include one of aluminum (Al), stainless steel (SUS), or iron (Fe).

In an embodiment, the secondary battery may include an angular secondary battery.

In an embodiment, the fillers may include an insulating material.

In an embodiment, the fillers may include at least one of polyimide, polyethylene terephthalate, polyethylene, a thermoplastic polyurethane, polyvinylide fluoride, or ethylene-vinyl acetate.

In an embodiment, a thickness of the fillers may be 0.5 mm to 1.5 mm.

In an embodiment, the fillers may be symmetrically located with each other with respect to the central region.

In an embodiment, a length of the fillers may be greater than or equal to a height of the first electrode plate and less than or equal to a height of the second electrode plate.

In an embodiment, a width of the fillers may be less than or equal to the separation distance from the one side of the second electrode plate to the central region.

In an embodiment, a length of the fillers may be greater than or equal to the length of the first electrode plate and less than or equal to the length of the second electrode plate.

In an embodiment, the electrode assembly may further include a filler in the central region.

According to some embodiments of the present disclosure, a secondary battery having enhanced safety may be provided.

According to some embodiments of the present disclosure, the performance and safety of the secondary battery may be improved by maintaining the pressure applied to the electrode assembly from the secondary battery at a constant or substantially constant pressure.

According to some embodiments of the present disclosure, the pressure applied to the electrode assembly may be maintained at the constant or substantially constant pressure regardless of the position of the electrode plate, and thus, resistance imbalances and salt precipitation of the secondary battery may be prevented or substantially prevented.

According to some embodiments of the present disclosure, an impact that may be applied (e.g., acting) on the electrode assembly may be absorbed by an elasticity of a filler.

However, aspects and features of the present disclosure are not limited to those described above, and other aspects and features not mentioned will be clearly understood by a person skilled in the art from the detailed description, described below.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view illustrating a secondary battery according to an embodiment of the present disclosure.
FIG. 2 is a perspective view illustrating an electrode assembly according to an embodiment of the present disclosure.
FIG. 3 is a sectional view of a case accommodating an electrode assembly according to a comparative example, and includes a plan view of the electrode assembly before swelling.
FIG. 4 is a sectional view of the case accommodating the electrode assembly according to the comparative example, and includes a plan view of the electrode assembly after swelling.
FIG. 5 is a sectional view of the secondary battery taken along the line P-P' of FIG. 1, and includes a plan view illustrating a first electrode plate and a second electrode plate.
FIG. 6 is a sectional view of the secondary battery taken along the line P-P' of FIG. 1, and includes a plan view illustrating the first electrode plate, the second electrode plate, and fillers.
FIG. 7 is a sectional view of the secondary battery taken along the line O-O' of FIG. 1, and includes a plan view illustrating the electrode assembly before swelling.
FIG. 8 is a sectional view of the secondary battery taken along the line O-O' of FIG. 1, and includes a plan view illustrating the electrode assembly after swelling.
FIG. 9 is a section of the secondary battery taken along the line P-P' of FIG. 1, and includes a plan view illustrating the first electrode plate, the second electrode plate, and the fillers.
FIG. 10 is a sectional view of the secondary battery taken along the line O-O' of FIG. 1, and includes a plan view illustrating the electrode assembly before swelling.
FIG. 11 is a sectional view of the secondary battery taken along the line O-O' of FIG. 1, and includes a plan view illustrating the electrode assembly after swelling.
FIG. 12 is a section of the secondary battery of Fig. 1 taken along line P-P', and is also a plan view illustrating the first electrode plate and the second electrode plate.
FIG. 13 is a sectional view of the secondary battery according to the comparative example, and includes a plan view illustrating the electrode assembly before swelling.
FIG. 14 is a sectional view of the secondary battery according to the comparative example, and includes a plan view illustrating the electrode assembly after swelling.
FIG. 15 is a sectional view of the secondary battery taken along the line P-P' of FIG. 1, and includes a plan view illustrating the first electrode plate, the second electrode plate, and the fillers.
FIG. 16 is a sectional view of the secondary battery taken along the line S-S' of FIG. 1, and includes a plan view illustrating the electrode assembly after swelling.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, layers and regions illustrated in the drawings may be exaggerated in size and relative size for convenience of illustration, and thus, are not necessarily limited thereto. Throughout the specification, the same reference symbols denote the same components.

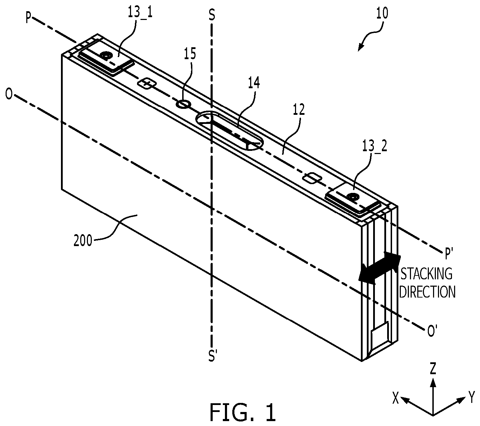

FIG. 1 is a perspective view illustrating a secondary battery 10 according to an embodiment of the present disclosure.

For example, the secondary battery 10 may include at least one or more electrode assemblies 100 that are wound or stacked with a separator 130 that is an insulator interposed between a positive electrode and a negative electrode, a case 200 in which the electrode assembly 100 and fillers disposed on a front surface of the electrode assembly 100 are embedded, and a cap plate 12 bonded to one opened end of the case 200. The secondary battery 10 illustrated in FIG. 1 may be shown as an angular secondary battery, but the present disclosure is not limited thereto, and the secondary battery 10 may be any suitable kind of secondary battery.

The electrode assembly 100 may be connected to a positive electrode tap on one side of a positive electrode plate. The electrode assembly 100 may be connected to a negative electrode tap on one side of a negative electrode plate. The positive electrode tap and the negative electrode tap may be electrically connected to a positive terminal 13_1 and a negative terminal 13_2, respectively, formed on the cap plate 12. The positive terminal 13_1 and the negative terminal 13_2 formed on the cap plate 12 may be electrically connected to a bus bar.

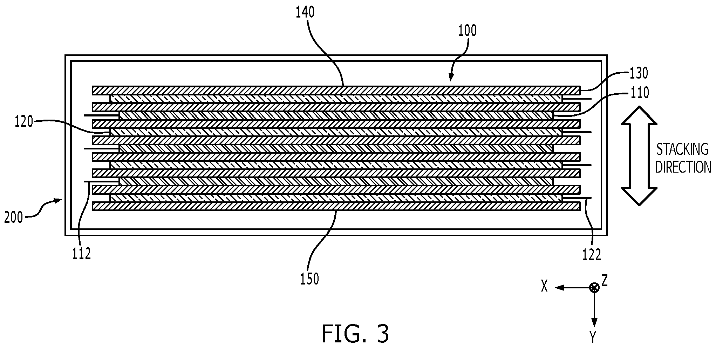

According to an embodiment, the electrode assembly 100 may be adjacent to the case 200 in a stacking direction of the electrode assembly 100, and may include a first surface and a second surface positioned at an outmost edge. Any one of the first surface or the second surface may include a central region of the electrode assembly 100 with a constant or substantially constant thickness, and edge regions other than the central region. The fillers may be disposed in the edge regions. This will be described in more detail below with reference to FIGS. 3 to 8.

The case 200 may form the overall outer appearance of the secondary battery 10 and may be made of a conductive metal, such as aluminum, aluminum alloy, stainless steel, iron or nickel-plated steel. In addition, the case 200 may provide a space in which the electrode assembly 100 is accommodated.

According to an embodiment, the case 200 may be an angular case, and the secondary battery 10 may be an angular secondary battery. However, the present disclosure is not limited thereto, and the secondary battery 10 may be any suitable kind of secondary battery, for example, such as having an angular shape, a cylindrical shape, or a pouch shape.

The case 200 may include long side walls facing each other, and short side walls facing each other. The long side walls may include a first long side wall and a second long side wall. The first long side wall and the second long side wall may face each other. The first long side wall and the second long side wall may be spaced apart (e.g., may be separated) from each other while facing each other. The short side walls may include a first short side wall and a second short side wall. The first short side wall and the second short side may be spaced apart (e.g., may be separated) from each other while facing each other. An area of each of the first short side wall and the second short side wall may be less than an area of each of the first long side wall and the second long side wall.

The cap plate 12 may be bonded to the opened end of the case 200, and may seal the case 200. The case 200 and the cap plate 12 may include (e.g., may be made of) conductive materials. According to an embodiment, an upper end of the case 200 may be opened, and the cap plate 12 may seal the opened upper end of the case 200.

The positive terminal 13_1 electrically connected to the positive electrode and the negative terminal 13_2 electrically connected to the negative electrode may be bonded to the cap plate 12. For example, the positive and negative terminals 13_1 and 13_2 may be installed to penetrate through the cap plate 12 and protrude outward.

At least one surface of the secondary battery 10 may include a vent portion 14. As illustrated in FIG. 1, the vent portion 14 may be formed on an upper surface of the secondary battery 10, for example, such as in the cap plate 12. The vent portion 14 may be configured to be opened when an internal pressure of the secondary battery 10 is more than or equal to a threshold pressure (e.g., a predetermined threshold pressure).

The cap plate 12 may include an electrolyte inlet 15. For example, the electrolyte inlet 15 may be a through-hole formed in the cap plate 12. The electrolyte inlet 15 may be formed to inject an electrolyte into the case 200 after the cap plate 12 is bonded to seal the opening of the case 200. The electrolyte inlet 15 may be sealed with a sealing member after the electrolyte is injected therethrough.

The secondary battery 10 may be a lithium secondary battery, a sodium secondary battery, or the like. However, the present disclosure is not limited thereto, and the secondary battery 10 may include any suitable kind of battery that may repeatedly provide electricity through charge and discharge. In an embodiment, if (e.g., when) the secondary battery 10 is the lithium secondary battery, the lithium secondary battery may be used in electric vehicles (EVs) because of its excellent lifespan and high rate characteristics. The lithium secondary battery may also be used for hybrid vehicles, such as plug-in hybrid electric vehicles (PHEVs). The lithium secondary battery may be used in any suitable field desiring or requiring large amounts of power storage. For example, the lithium secondary battery may be used for electric bikes, electric tools, and the like.

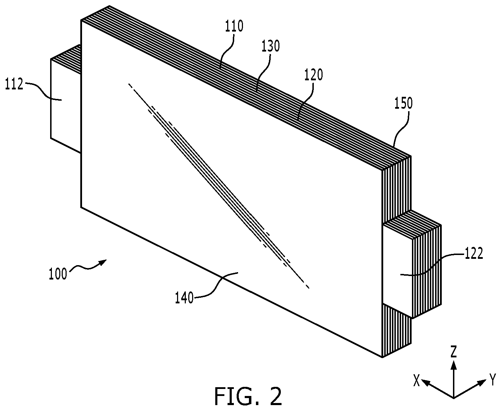

FIG. 2 is a perspective view illustrating an electrode assembly 100 according to an embodiment of the present disclosure.

Referring to FIG. 2, the electrode assembly 100 may include a first electrode plate 110, a second electrode plate 120, and a separator 130 positioned between the first electrode plate 110 and the second electrode plate 120. The first electrode plate 110, the second electrode plate 120, and the separator 130 may be formed as thin plates or films. The electrode assembly 100 may be formed in a structure in which a plurality of sheets of first electrode plates 110 and second electrode plates 120 are alternately stacked with separators 130 interposed therebetween. In addition, the electrode assembly 100 may be a Z-stack electrode assembly in which the first electrode plate 110 and the second electrode plate 120 are inserted into both sides of a separator, which is then bent into a Z-stack.

Although FIG. 2 illustrates that the first electrode plate 110 and the second electrode plate 120 have the same or substantially the same size as each other, the two electrode plates 110, 120 may have different sizes from each other. The sizes of the first electrode plate 110 and the second electrode plate 120 may be different from each other, and thus, an overhang may be generated. For example, an area of the negative electrode plate may be greater than an area of the positive electrode plate.

FIG. 2 illustrates an example of a stacked structure of the stacked electrode assembly 100, and the number and size of the electrode plates are not limited thereto. The first electrode plate 110 or the second electrode plate 120 may be present at the outmost edge of the electrode assembly 100. The first electrode plate 110 may be formed as the positive electrode plate and the second electrode plate 120 may be formed as the negative electrode plate, or vice versa.

According to an embodiment, if (e.g., when) the first electrode plate 110 is formed as the positive electrode plate, the first electrode plate 110 may be formed by applying a positive electrode active material layer with a lithium-based oxide as a main component to both surfaces (e.g., opposite surfaces) of a positive current collector including (e.g., made of) a thin aluminum foil. Positive electrode non-coated portions that are regions where a positive electrode active material layer is not coated may be formed on both ends (e.g., opposite ends) of the positive current collector.

A positive electrode plate for a rechargeable lithium battery may include a current collector and a positive electrode active material layer on the current collector. The positive electrode active material layer may include a positive electrode active material and may further include a binder and/or a conductive material (e.g., an electrically conductive material).

For example, the positive electrode plate may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Al may be used as the current collector, but is not limited thereto.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiaA1-bXbO2-cDc (0.90≤a≤1.8, 0≤b≤0.5, and 0≤c≤0.05); LiaMn2-bXbO4-cDc (0.90≤a≤1.8, 0≤b≤0.5, and 0≤c≤0.05); LiaNi1-b-cCobXcO2-αDα (0.90≤a≤1.8, 0≤b≤0.5, 0≤c≤0.5, and 0<α<2); LiaNi1-b-cMnbXcO2-αOα (0.90≤a≤1.8, 0≤b≤0.5, 0≤c≤0.5, and 0<α<2); LiaNibCocL1dGeO2 (0.90≤a≤1.8, 0≤b≤0.9, 0≤c≤0.5, 0≤d≤0.5, and 0≤e≤0.1); LiaNiGbO2 (0.90≤a≤1.8 and 0.001≤b≤0.1); LiaCoGbO2 (0.90≤a≤1.8 and 0.001≤b≤0.1); LiaMn1-bGbO2 (0.90≤a≤1.8 and 0.001≤b≤0.1); LiaMn2GbO4 (0.90≤a≤1.8 and 0.001≤b≤0.1); LiaMn1-gGgPO4 (0.90≤a≤1.8 and 0≤g≤0.5); Li(3-f)Fe2(PO4)3 (0≤f≤2); or LiaFePO4 (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode active material may be, for example, a high nickel-based positive electrode active material having a nickel content of more than or equal to about 80 mol%, more than or equal to about 85 mol%, more than or equal to about 90 mol%, more than or equal to about 91 mol%, or more than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

According to an embodiment, if (e.g., when) the second electrode plate 120 is formed as the negative electrode plate, the second electrode plate 120 may be formed by applying a negative electrode active material layer with a carbon material as a main component to both surfaces (e.g., opposite surfaces) of a negative current collector including (e.g., made of) a thin copper foil. Negative electrode non-coated portions that are regions where a negative electrode active material layer is not coated may be formed at both ends (e.g., opposite ends) of the negative current collector.

The negative electrode plate for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The negative current collector may include a copper foil, a nickel foil, a stainless steel foil, a titanium foil, a nickel foam, a copper foam, a polymer substrate coated with a conductive metal, or a combination thereof.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x ≤ 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO2, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The separator 130 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 130 may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and a combination thereof, but is not limited thereto.

The organic material and the inorganic material may be mixed in one coating layer, or a coating layer including an organic material and a coating layer including an inorganic material may be stacked.

According to an embodiment, in the electrode assembly 100, a first electrode tap 112 may be formed on one side of the first electrode plate 110, and a second electrode tap 122 may be formed on one side of the second electrode plate 120. The first electrode tap 112 and the second electrode tap 122 may be formed by welding taps on non-coated portions of the first electrode plate 110 and the second electrode plate 120, or may be formed by blanking the non-coated portions of the first electrode plate 110 and the second electrode plate 120. In the stacked state, the first electrode tap 112 and the second electrode tap 122 may be formed on different side surfaces of the electrode assembly 100. When the first electrode plate 110 is formed as the positive electrode plate, the first electrode tap 112 may be formed as the positive electrode tap, and the second electrode tap 122 may be formed as the negative electrode tap. When polarities of the first electrode plate 110 and the second electrode plate 120 are opposite to each other, the first electrode tap 112 may be formed as the negative electrode tap, and the second electrode tap 122 may be formed as the positive electrode tap.

According to an embodiment, the electrode assembly 100 may include a first surface 140 and a second surface 150 positioned at an outmost edge of the electrode assembly 100 in the stacking direction (e.g., the Y-axis direction). The first surface 140 and the second surface 150 of the electrode assembly 100 may come into contact with the case. Fillers may be disposed on the first surface 140 and the second surface 150 of the electrode assembly 100.

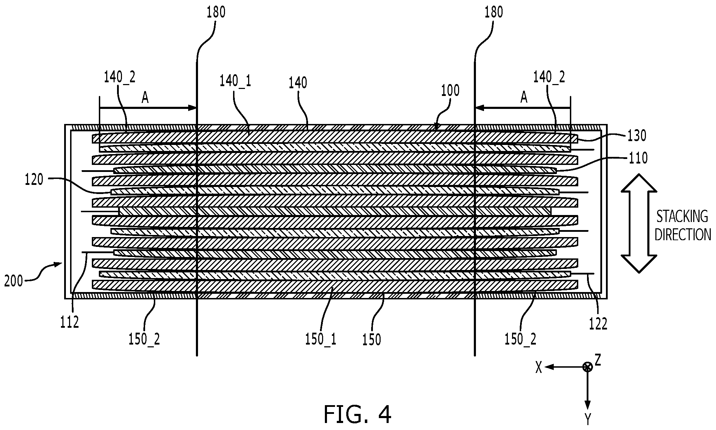

FIG. 3 is a sectional view of a case 200 accommodating an electrode assembly 100 according to a comparative example, and includes a plan view illustrating the electrode assembly 100 before swelling. FIG. 4 is a sectional view of the case 200 accommodating the electrode assembly 100 according to the comparative example, and includes a plan view illustrating the electrode assembly 100 after swelling.

Referring to FIGS. 3 and 4, the case 200 for the secondary battery 10 may correspond to a structure for accommodating the electrode assembly 100. The electrode assembly 100 may include the first electrode plate 110, the second electrode plate 120, and the separator 130. The electrode assembly 100 may include a structure in which the first electrode plate 110, the separator 130, and the second electrode plate 120 are repeatedly stacked. If (e.g., when) the secondary battery includes a stacked body in which the electrode assemblies 100 are stacked, the stacking direction may be the Y-axis direction.

The first long side wall and the second long side wall of the case 200 may cover surfaces of the electrode assembly in the +Y-axis direction and the -Y-axis direction, and the first short side wall and the second short side wall of the case 200 may cover surfaces of the electrode assembly in the +X-axis direction and the -X-axis direction of the electrode assembly. In other words, the long side walls and the short side walls of the case 200 may surround (e.g., around a periphery of) the electrode assembly in the X-axis direction and the Y-axis direction.

The sizes of the first electrode plate 110 and the second electrode plate 120 may be different from each other. If (e.g., when) the negative electrode plate is smaller, the separator may be damaged, and a short circuit may occur as lithium ions are precipitated from a portion of the positive electrode plate that does not face the negative electrode plate and may grow during charge. Thus, if (e.g., when) the second electrode plate 120 is the negative electrode plate and the first electrode plate 110 is the positive electrode plate, the second electrode plate 120 may be larger than the first electrode plate 110.

FIG. 3 is a comparative example schematically illustrating the stacked structure of the stacked electrode assembly 100, and the number and size of the electrode plates are not limited thereto. The first electrode plate 110 or the second electrode plate 120 may be present at the outmost edge of the electrode assembly 100. The first electrode tap 112 and the second electrode tap 122 of the electrode assembly 100 may be formed on different side surfaces of the electrode assembly 100.

Referring to FIG. 3, thicknesses of the first electrode plate 110 and the second electrode plate 120 may be constant before the electrode assembly 100 is swelled.

However, due to a combined mixture of the active material, the binder, and the conductive material, a volume of the electrode assembly 100 may be changed during secondary battery charge and discharge. As illustrated in FIG. 4, the thicknesses of the first electrode plate 110 and the second electrode plate 120 may not be constant after the electrode assembly 100 is swelled. For example, thicknesses of portions of the first electrode plate 110 and the second electrode plate 120 on which the first electrode tap 112 and the second electrode tap 122 are formed may not be constant, or an empty space may be formed between the electrode plates.

After the electrode assembly 100 is swelled, the electrode assembly 100 may come into contact with the case 200 in the stacking direction (e.g., the Y-axis direction) of the electrode assembly. As used herein, when the electrode assembly 100 is described as coming into contact with the case 200, this includes both a case where the electrode assembly 100 comes into contact with the case 200 with another member, such as an insulating member interposed therebetween, and a case where the electrode assembly 100 comes into a direct contact with the case 200. A contact surface of the electrode assembly 100 with the case 200 may include the first surface 140 and the second surface 150 positioned at the outmost edge. A portion at which the thickness of the electrode assembly 100 is constant, and a portion where the thickness of the electrode assembly 100 is not constant may be generated.

At least one of the first surface 140 or the second surface 150 includes a central region 140_1 or 150_1 where the thickness of the electrode assembly 100 is constant, and an edge region 140_2 or 150_2 other than the central region 140_1 or 150_1. Accordingly, ends 180 of the central region 140_1 or 150_1 may be defined (e.g., may be set).

A separation distance A from one side of the second electrode plate 120 on which the second electrode tap 122 is formed to the end 180 of the central region 140_1 or 150_1 may be a portion where the thickness of the electrode assembly 100 is not constant.

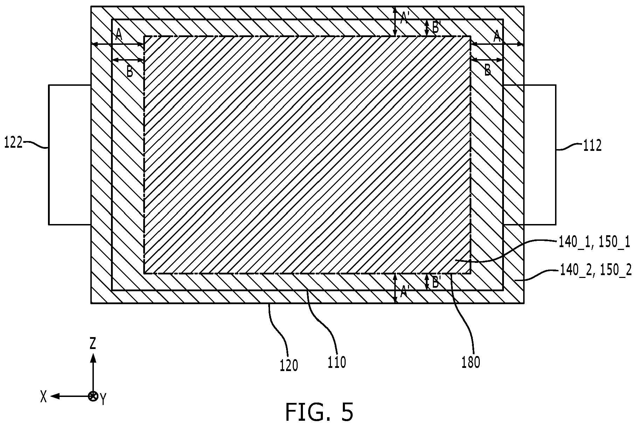

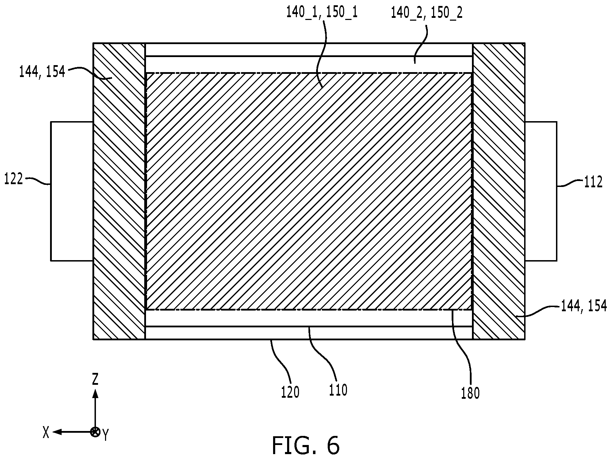

FIG. 5 is a sectional view of the secondary battery 10 taken along the line P-P' of FIG. 1, and includes a plan view illustrating the first electrode plate 110 and the second electrode plate 120. FIG. 6 is a sectional view of the secondary battery 10 taken along the line P-P' of FIG. 1, and includes a plan view illustrating the first electrode plate 110, the second electrode plate 120, and fillers.

In FIG. 5, the size of the first electrode plate 110 on which the first electrode tap 112 is formed and the size of the second electrode plate 120 on which the second electrode tap 122 is formed are shown, and a region of the electrode assembly 100 is illustrated in a relationship configuration between the first electrode plate 110 and the second electrode plate 120.

According to an embodiment, the first electrode plate 110 may be the positive electrode plate and the second electrode plate 120 may be the negative electrode plate. The second electrode plate 120 may be larger than the first electrode plate 110. For example, a length of the second electrode plate 120 may be greater than a length of the first electrode plate 110 in the X-axis direction. The length of the second electrode plate 120 may be greater than the length of the first electrode plate 110 in the Z-axis direction. The lengths of the first electrode plate 110 and the second electrode plate 120 based on the Z-axis direction may be referred to as heights of the first electrode plate 110 and the second electrode plate 120.

According to an embodiment, the central regions 140_1 and 150_1 of the electrode assembly 100 may be positioned inside the first electrode plate 110. The ends 180 of the central regions 140_1 and 150_1 may be used to describe the positions of fillers 144, 154 described in more detail below.

According to an embodiment, the first electrode tap 112 and the second electrode tap 122 may be formed on different side surfaces in the electrode assembly 100. The first electrode tap 112 and the second electrode tap 122 may be formed in opposite directions from each other in the electrode assembly 100. The first electrode tap 112 and the second electrode tap 122 may be formed to protrude from the first electrode plate 110 and the second electrode plate 120, respectively. As a result, the first electrode tap 112 and the second electrode tap 122 may be connected to the current collectors.

According to an embodiment, the first electrode tap 112 and the second electrode tap 122 may be formed at various suitable positions of the first electrode plate 110 and the second electrode plate 120. Accordingly, separation distances from one sides of the first electrode plate 110 on which the first electrode tap 112 is formed and the second electrode plate 120 on which the second electrode tap 122 is formed to the central regions (140_1 and 150_1) may be different from each other. The separation distance may refer to a shortest distance from each of the one sides or edges of the first electrode plate 110 and the second electrode plate 120 to the end 180 of the central region 140_1 or 150_1.

According to an embodiment, a separation distance B from one side of the first electrode plate 110 on which the first electrode tap 112 is formed to the central region 140_1 or 150_1 may be greater than a separation distance B' from another side of the first electrode plate 110 on which the first electrode tap 140_1 or 150_1 is not formed to the central region 140_1 or 150_1. The separation distance A from one side of the second electrode plate 120 on which the second electrode tap 122 is formed to the central region 140_1 or 150_1 may be greater than a separation distance A' from another side of the second electrode plate 120 on which the second electrode tap is not formed to the central region 140_1 or 150_1.

According to an embodiment, the separation distance A from one side of the second electrode plate 120 on which the second electrode tap 122 is formed to the central region 140_1 or 150_1 may be 0 mm to 10 mm. As a result, the central regions 140_1 and 150_1 where the thicknesses of the first electrode plate 110 and the second electrode plate 120 of the electrode assembly 100 are constant or substantially constant, and the edge regions 140_2 and 150_2 where the thicknesses of the first electrode plate 110 and the second electrode plate 120 are not constant may be determined (e.g., may be set).

Referring to FIG. 6, the fillers 144 and 154 may be disposed in the edge regions 140_2 and 150_2 of the electrode assembly 100. For example, adhesive layers may be contained in one surfaces of the fillers 144 and 154, and thus, the fillers 144 and 154 may adhere to the edge regions 140_2 and 150_2 of the electrode assembly 100.

According to an embodiment, lengths of the fillers 144 and 154 may be greater than or equal to the height of the first electrode plate 110, and less than or equal to the height of the second electrode plate 120. For example, based on the Z-axis direction, the lengths of the fillers 144 and 154 may be greater than or equal to the length of the first electrode plate 110, and may be less than or equal to the length of the second electrode plate 120. As a result, the edge regions 140_2 and 150_2 of the swelled electrode assembly may be constantly pressed in the Z-axis direction.

According to an embodiment, widths of the fillers 144 and 154 may be less than or equal to the separation distance A from one side of the second electrode plate 120 on which the second electrode tap 122 is formed to the central region 140_1 or 150_1. For example, based on the X-axis direction, the lengths of the fillers 144 and 154 may be less than or equal to a shortest distance from one side to the edge of the second electrode plate 120 on which the second electrode tap 122 is formed to the end 180 of the central region 140_1 or 150_1. As a result, the edge regions 140_2 and 150_2 of the swelled electrode assembly may be constantly pressed in the X-axis direction.

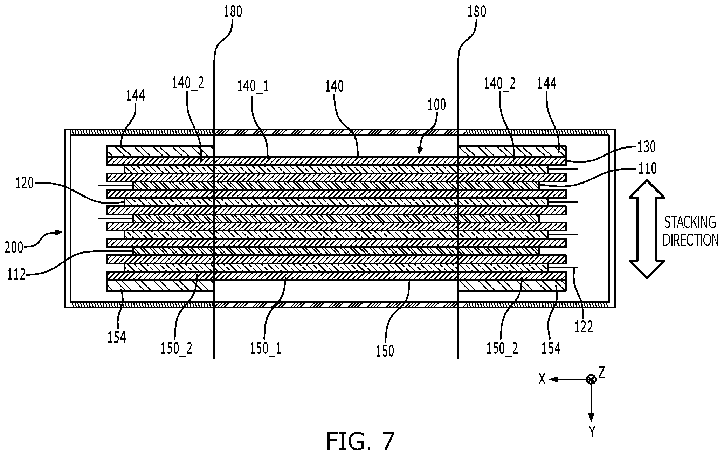

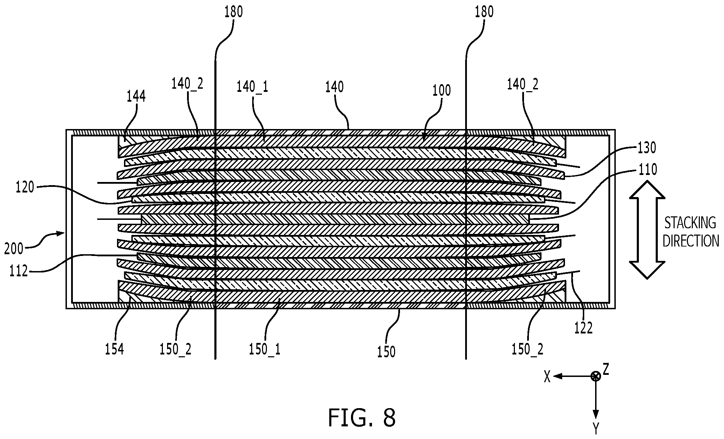

FIG. 7 is a sectional view of the secondary battery 10 taken along the line O-O' of FIG. 1, and includes a plan view illustrating the electrode assembly 100 before swelling. FIG. 8 is a sectional view of the secondary battery 10 taken along the line O-O' of FIG. 1, and includes a plan view illustrating the electrode assembly 100 after swelling. The electrode assembly 100, the central regions 140_1 and 150_1, and the edge regions 140_2 and 150_2 may be the same or substantially the same as those described above, and thus, redundant description thereof may not be repeated.

Referring to FIGS. 7 and 8, the first long side wall and the second long side wall of the case 200 may cover the surfaces formed in the stacking direction (e.g., the Y-axis direction) of the electrode assembly 100. The first short side wall and the second short side wall of the case 200 may cover surfaces formed in (e.g., facing in) the direction (e.g., X-axis direction) perpendicular to or substantially perpendicular to the stacking direction of the electrode assembly 100.

According to an embodiment, the fillers 144 and 154 may be disposed in the edge regions 140_2 and 150_2 of the electrode assembly 100. Before the electrode assembly 100 is swelled, the fillers 144 and 154 in the edge regions 140_2 and 150_2 may not press the electrode assembly 100.

According to an embodiment, the fillers 144 and 154 may include an insulating material. The insulating material may form an electrical barrier between the electrode assembly 100 and the case 200 to prevent or substantially prevent an energization and a short circuit.

The materials of the fillers 144 and 154 may have electrical insulating properties, and may include any one of polyimide (PI), polyethylene terephthalate (PET), polyethylene (PE), a thermoplastic polyurethane (TPU), polyvinylidene fluoride (PVDF), and/or ethylene-vinyl acetate (EVA).

According to an embodiment, polyimide (PI), polyethylene terephthalate (PET), and polyethylene (PE) may be flexible and durable, and may be deformed by a pressure.

According to an embodiment, the thermoplastic polyurethane (TPU) and polyvinylidene fluoride (PVDF) may remain at a suitable elasticity even at a high temperature due to thermoplasticity, flexibility, and high adhesiveness, and may be deformed by a pressure.

According to an embodiment, ethylene-vinyl acetate (EVA) may be flexible and elastic, and may be deformed by a pressure.

According to the characteristics of the materials thereof, the fillers 144 and 154 disposed in the edge regions 140_2 and 150_2 after the electrode assembly 100 is swelled may be deformed to correspond to spaces between the edge regions 140_2 and 150_2 and the case 200. As a result, the fillers 144 and 154 disposed in the edge regions 140_2 and 150_2 may uniformize or substantially uniformize the pressures that may be applied to the edge regions 140_2 and 150_2 after the electrode assembly 100 is swelled.

According to an embodiment, the fillers 144 and 154 of the edge regions 140_2 and 150_2 may be symmetrically or substantially symmetrically formed with each other with respect to the central regions 140_1 and 150_1. As a result, even though the first electrode tap 112 and the second electrode tap 122 are formed on different side surfaces of the electrode assembly 100, the fillers may press both the portions where the thicknesses of the swelled electrode assembly 100 are not constant.

According to an embodiment, the thicknesses of the fillers 144 and 154 in the edge regions 140_2 and 150_2 may be determined (e.g., may be set) according to the desired design of secondary battery, such as the material of the active material, the number of the stacked electrode assemblies, and a loading level of the electrode plate. If (e.g., when) various designs of the secondary batteries are considered, the thicknesses of the fillers 144 and 154 in the edge regions 140_2 and 150_2 may range from 0.5 mm to 1.5 mm. The thicknesses of the fillers 144 and 154 may be constant or substantially constant. In other embodiments, the thicknesses of the fillers 144 and 154 may be thicker the further away from the central regions 140_1 and 150_1. In other words, as parts of the filler 144 and 154 become farther away from the central regions 140_1 and 150_1, their thicknesses may increase.

According to an embodiment, the thicknesses of the fillers 144 and 154 in the edge regions 140_2 and 150_2 after the electrode assembly 100 is swelled may become thicker the further away from the central regions 140_1 and 150_1. As a result, the swelled electrode assembly 100 may be properly pressed. Accordingly, resistance imbalances that may be caused by the non-constant thicknesses of the first electrode plate 110 and the second electrode plate 120 may be eliminated or reduced, and safety of the secondary battery 10 may be assured or improved.

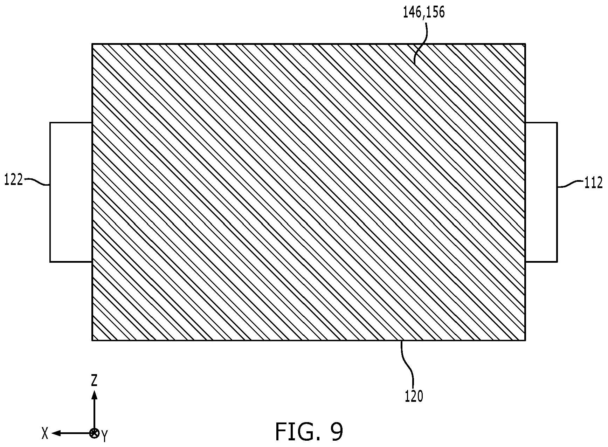

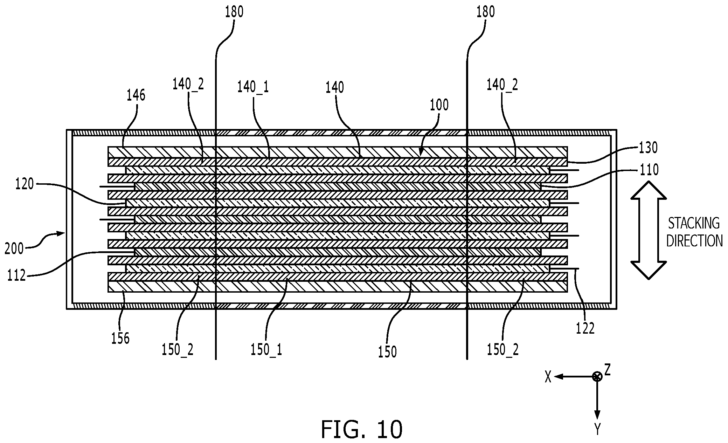

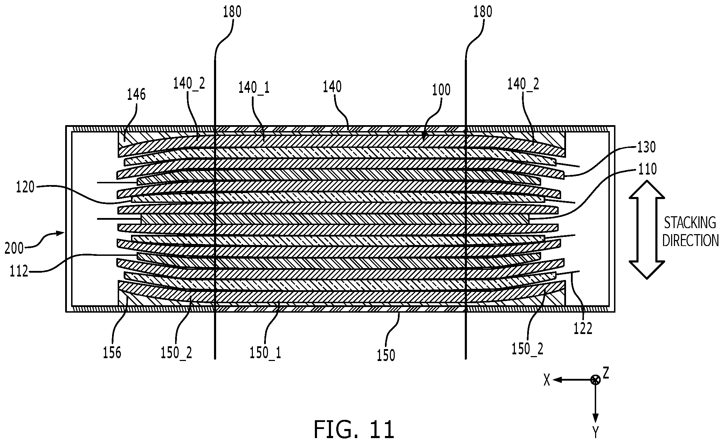

FIG. 9 is a sectional view of a secondary battery 10 taken along the line P-P' of FIG. 1, and includes a plan view illustrating the first electrode plate 110, the second electrode plate 120, and the fillers 146 and 156. FIG. 10 is a sectional view of the secondary battery 10 taken along the line O-O' of FIG. 1, and includes a plan view illustrating the electrode assembly 100 before swelling. FIG. 11 is a sectional view of the secondary battery 10 taken along the line O-O' of FIG. 1, and includes a plan view illustrating the electrode assembly 100 after swelling. Hereinafter, redundant description as those with reference to FIGS. 5 to 8 above may not be repeated.

Referring to FIGS. 9 to 11, the electrode assembly 100 may include fillers 146 and 156 that may be further disposed in the central regions 140_1 and 150_1 (e.g., see FIG. 5).

According to an embodiment, widths of the fillers 146 and 156 may be less than or equal to the length of the second electrode plate 120. For example, based on the X-axis direction, lengths of the fillers 146 and 156 may be less than or equal to the length of the second electrode plate 120 on which the second electrode tap 122 is formed. As a result, the central regions 140_1 and 150_1 and the edge regions 140_2 and 150_2 of the swelled electrode assembly may be constantly or substantially constantly pressed in the X-axis direction.

In an embodiment, the central regions 140_1 and 150_1 and the edge regions 140_2 and 150_2 of the electrode assembly 100 may include the fillers 146 and 156. Before the electrode assembly 100 is swelled, the fillers 144 and 154 of the central regions 140_1 and 150_1 and the edge regions 140_2 and 150_2 may not press the electrode assembly 100.

The fillers 146 and 156 disposed in the central regions 140_1 and 150_1 and the edge regions 140_2 and 150_2 after the electrode assembly 100 is swelled may be deformed to correspond to the spaces between the central regions 140_1 and 150_1 and the edge regions 140_2 and 150_2 and the case 200. As a result, the fillers 146 and 156 disposed in the central regions 140_1 and 150_1 and the edge regions 140_2 and 150_2 may uniformize or substantially uniformize the pressures applied to the edge regions 140_2 and 150_2 after the electrode assembly 100 is swelled. The elasticity of the fillers 146 and 156 may absorb an impact acting on the electrode assembly 100.

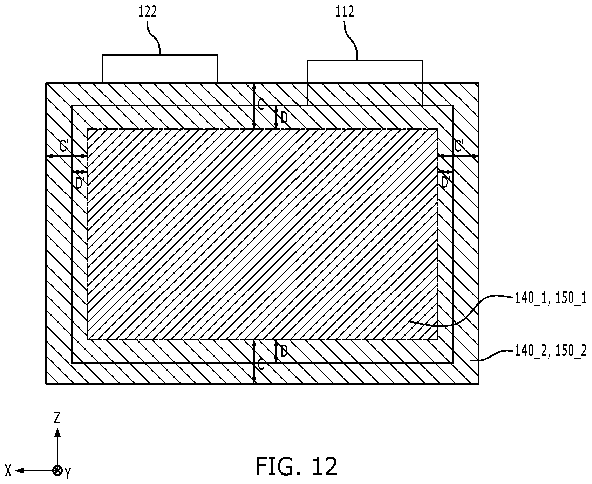

FIG. 12 is a sectional view of the secondary battery 10 taken along the line P-P' of FIG. 1, and includes a plan view illustrating the first electrode plate 110 and the second electrode plate 120.

In FIG. 12, the size of the first electrode plate 110 on which the first electrode tap 112 is formed and the size of the second electrode plate 120 on which the second electrode tap 122 is formed are shown, and a region of the electrode assembly 100 is illustrated in a relationship configuration between the first electrode plate 110 and the second electrode plate 120. Hereinafter, redundant description of the size comparison between the first electrode plate 120 and the second electrode plate 120 and the description of the region of the electrode assembly 100 described above with reference to FIG. 6 may not be repeated.

According to an embodiment, the first electrode tap 112 and the second electrode tap 122 may be formed on the same side surface in the electrode assembly 100. The first electrode tap 112 and the second electrode tap 122 may be formed to protrude from the first electrode plate 110 and the second electrode plate 120. As a result, the first electrode tap 112 and the second electrode tap 122 may be connected to the current collectors.

According to an embodiment, a separation distance D from one side of the first electrode plate 110 on which the first electrode tap 112 is formed to the central region 140_1 or 150_1 may be greater than a separation distance D' from another side of the first electrode plate 110 on which the first electrode tap is not formed to the central region 140_1 or 150_1. A separation distance C from one side of the second electrode plate 120 on which the second electrode tap 122 is formed to the central region 140_1 or 150_1 may be greater than a separation distance C' from another side of the second electrode plate 120 on which the second electrode tap 120 is not formed to the central region 140_1 or 150_1. The separation distance may refer to a shortest distance from one sides or the edges of the first electrode plate 110 and the second electrode plate 120 to an end 190 of the central region 140_1 or 150_1.

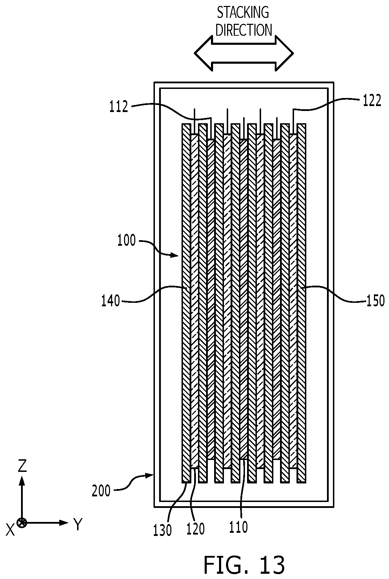

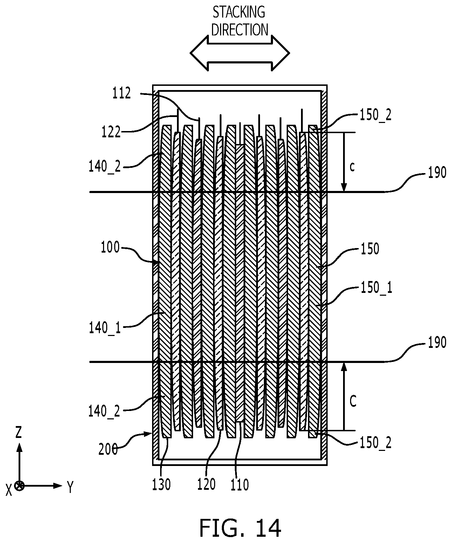

FIG. 13 is a sectional view of a secondary battery 10 according to a comparative example, and includes a plan view illustrating the electrode assembly 100 before swelling. FIG. 14 is a sectional view of a secondary battery 10 according to a comparative example, and includes a plan view illustrating the electrode assembly 100 after swelling. Redundant description as those with reference to FIGS. 3 and 4 above may not be repeated.

The stacking direction of the first electrode plate 110, the second electrode plate 120, and the separator 130 of the electrode assembly 100 may be the Y-axis direction. The first electrode tap 112 of the electrode assembly 100 may be formed on the non-coated portion of the first electrode plate 110, and the first electrode tap 112 and the second electrode tap 122 of the electrode assembly 100 may be formed on the same side surface of the electrode assembly 100. After the electrode assembly 100 is swelled, the electrode assembly 100 may come into contact with the case 200 in the stacking direction (e.g., the Y-axis direction) of the electrode assembly 100.

The electrode assembly 100 may include the first surface 140 and the second surface 150 that come into contact with the case 200 in the stacking direction (e.g., the Y-axis direction) of the electrode assembly 100, and are positioned at the outmost edge. The cap plate and the short side wall may face each other in the direction (e.g., the Z-axis direction) perpendicular to the stacking direction of the electrode assembly 100.

At least one of the first surface 140 or the second surface 150 may include the central region 140_1 or 150_1 where the thickness of the electrode assembly 100 is constant, and the edge region 140_2 or 150_2 other than the central region 140_1 or 150_1. Accordingly, the end 190 of the central region 140_1 or 150_1 may be formed.

The separation distance C from one side of the second electrode plate 120 on which the second electrode tap 122 is formed to the end 190 of the central region 140_1 or 150_1 may be a portion where the thickness of the electrode assembly 100 is not constant.

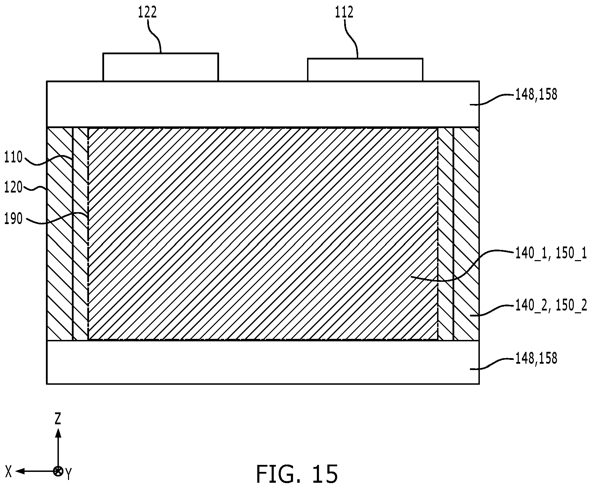

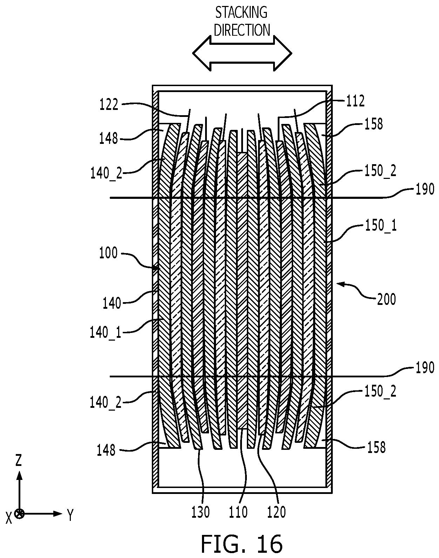

FIG. 15 is a sectional view of the secondary battery taken along the line P-P' of FIG. 1, and includes a plan view illustrating the first electrode plate, the second electrode plate, and the filler. FIG. 16 is a sectional view of the secondary battery taken along the line S-S' of FIG. 1, and includes a plan view of the electrode assembly after swelling. Redundant description of the structural features described above with reference to FIGS. 6 to 8, and the electrode assembly 100, the central region 140_1 or 150_1, and the edge region 140_2 or 150_2 described above may not be repeated.

Referring to FIG. 15, according to an embodiment, lengths of fillers 148 and 158 may be greater than or equal to the length of the first electrode plate 110, and may be less than or equal to the length of the second electrode plate 120. For example, based on the X-axis direction, the lengths of the fillers 148 and 158 may be greater than or equal to the length of the first electrode plate 110, and may be less than or equal to the length of the second electrode plate 120. As a result, the edge regions 140_2 and 150_2 of the swelled electrode assembly may be constantly or substantially constantly pressed in the X-axis direction.

According to an embodiment, widths of the fillers 148 and 158 may be less than or equal to the separation distance from one side of the second electrode plate 120 on which the second electrode tap 122 is formed to the central region 140_1 or 150_1 (e.g., see FIG. 12). For example, based on the X-axis direction, the lengths of the fillers 148 and 158 may be less than or equal to a shortest distance from one side of the second electrode plate 120 on which the second electrode tap 122 is formed to the end 190 of the central region 140_1 or 150_1. As a result, the edge regions 140_2 and 150_2 of the swelled electrode assembly may be constantly or substantially constantly pressed in the Z-axis direction.

Referring to FIG. 16, the first long side wall and the second long side wall of the case 200 may cover the surfaces formed in the stacking direction (e.g., the Y-axis direction) of the electrode assembly 100, and the cap plate 12 and the short side wall of the case 200 may cover the surfaces formed in the direction (e.g., the Z-axis direction) perpendicular to the stacking direction of the electrode assembly 100.

According to some embodiments, thicknesses of the fillers 148 and 158 in the edge regions 140_2 and 150_2 after the electrode assembly 100 is swelled may become thicker the further away from the central regions 140_1 and 150_1 they are. As a result, the swelled electrode assembly 100 may be properly pressed. Accordingly, resistance imbalances that may be caused by the non-constant thicknesses of the first electrode plate 110 and the second electrode plate 120 may be eliminated or reduced, and safety of the secondary battery may be assured or improved.

According to some embodiments, even though the first electrode tap 112 and the second electrode tap 122 may be positioned on the same side surface of the electrode assembly 100 as each other, the fillers 148 and 158 may properly press the swelled electrode assembly 100.

Embodiments are set out in the following clauses.

Clause 1. A secondary battery (10) comprising: an electrode assembly (100) comprising: a first electrode plate (110) on which a first electrode tap (112) is located;
a second electrode plate (120) on which a second electrode tap (122) is located; and
a separator (130) between the first electrode plate (110) and the second electrode plate (120); fillers (144, 154) on a front surface of the electrode assembly (100); and
a case (200) accommodating the electrode assembly (100), wherein the electrode assembly (100) has a first surface (140) and a second surface (150) at an outmost edge, and facing the case (200) in a stacking direction of the electrode assembly (100),
wherein at least one of the first surface (140) or the second surface (150) comprises a central region (140_1, 150_1) where a thickness of the electrode assembly (100) is constant, and edge regions (140_2, 150_2) other than the central region (140_1, 150_1), and wherein the fillers (144, 154) are located in the edge regions (140_2, 150_2).

Clause 2. The secondary battery (10) according to Clause 1, wherein the first electrode plate (110) is a positive electrode plate, and the second electrode plate (120) is a negative electrode plate.

Clause 3. The secondary battery (10) according to Clause 2, wherein a length of the second electrode plate (120) is greater than a length of the first electrode plate (110).

Clause 4. The secondary battery (10) according to Clause 3, wherein a height of the second electrode plate (120) is greater than a height of the first electrode plate (110).

Clause 5. The secondary battery (10) according to Clause 4, wherein the central region (140_1, 150_1) is located inside the first electrode plate (110).

Clause 6. The secondary battery (10) according to Clause 5, wherein a separation distance (B) from one side of the first electrode plate (110) to the central region (140_1, 150_1) is greater than a separation distance (B') from another side of the first electrode plate (110) to the central region (140_1, 150_1), the one side of the first electrode plate (110) corresponding to a first side of the first electrode plate (110) on which the first electrode tap (112) is located, and the other side of the first electrode plate (110) corresponding to a second side of the first electrode plate (110) on which the first electrode tap (112) is not located.

Clause 7. The secondary battery (10) according to Clause 6, wherein a separation distance (A) from one side of the second electrode plate (120) to the central region (140_1, 150_1) is greater than a separation distance (A') from another side of the second electrode plate (120) to the central region (140_1, 150_1), the one side of the second electrode plate (120) corresponding to a first side of the second electrode plate (120) on which the second electrode tap (122) is located, and the other side of the second electrode plate (120) corresponding to a second side of the second electrode plate (120) on which the second electrode tap (122) is not located.

Clause 8. The secondary battery (10) according to Clause 7, wherein the first electrode tap (112) and the second electrode tap (122) are located on different side surfaces of the electrode assembly (100) from each other.

Clause 9. The secondary battery (10) according to Clause 7, wherein the first electrode tap (112) and the second electrode tap (122) are located on the same side surface of the electrode assembly (100) as each other.

Clause 10. The secondary battery (10) according to Clause 1, wherein the fillers (144, 154) comprise at least one of polyimide, polyethylene terephthalate, polyethylene, a thermoplastic polyurethane, polyvinylide fluoride, or ethylene-vinyl acetate.

Clause 11. The secondary battery (10) according to Clause 1, wherein the fillers (144, 154) are symmetrically located with each other with respect to the central region (140_1, 150_1).

Clause 12. The secondary battery (10) according to Clause 8, wherein a length of the fillers (144, 154) is greater than or equal to a height of the first electrode plate (110) and less than or equal to a height of the second electrode plate (120).

Clause 13. The secondary battery (10) according to Clause 7, wherein a width of the fillers (144, 154) is less than or equal to the separation distance (A) from the one side of the second electrode plate (120) to the central region (140_1, 150_1).

Clause 14. The secondary battery (10) according to Clause 9, wherein a length of the fillers (148, 158) is greater than or equal to the length of the first electrode plate (110) and less than or equal to the length of the second electrode plate (120).

Clause 15. The secondary battery (10) according to Clause 1, wherein the electrode assembly (110) further comprises a filler (146, 156) in the central region (140_1, 150_1).

Although the present disclosure has been described above with respect to embodiments thereof, the present disclosure is not limited thereto. Various modifications and variations can be made thereto by those skilled in the art within the present disclosure and the equivalent scope of the appended claims.

## Claims

1. A secondary battery (10) comprising:
an electrode assembly (100) comprising:
a first electrode plate (110) on which a first electrode tap (112) is located;
a second electrode plate (120) on which a second electrode tap (122) is located; and
a separator (130) between the first electrode plate (110) and the second electrode plate (120);
fillers (144, 154) on a front surface of the electrode assembly (100); and
a case (200) accommodating the electrode assembly (100),
wherein the electrode assembly (100) has a first surface (140) and a second surface (150) at an outmost edge, and facing the case (200) in a stacking direction of the electrode assembly (100),
wherein at least one of the first surface (140) or the second surface (150) comprises a central region (140_1, 150_1) where a thickness of the electrode assembly (100) is constant, and edge regions (140_2, 150_2) other than the central region (140_1, 150_1), and
wherein the fillers (144, 154) are located in the edge regions (140_2, 150_2).

2. The secondary battery (10) according to claim 1, wherein the first electrode plate (110) is a positive electrode plate, and the second electrode plate (120) is a negative electrode plate.

3. The secondary battery (10) according to claim 1 or 2, wherein a length of the second electrode plate (120) is greater than a length of the first electrode plate (110).

4. The secondary battery (10) according to claim 1, 2 or 3, wherein a height of the second electrode plate (120) is greater than a height of the first electrode plate (110).

5. The secondary battery (10) according to any preceding claim, wherein the central region (140_1, 150_1) is located inside the first electrode plate (110).

6. The secondary battery (10) according to any preceding claim, wherein a separation distance (B) from one side of the first electrode plate (110) to the central region (140_1, 150_1) is greater than a separation distance (B') from another side of the first electrode plate (110) to the central region (140_1, 150_1),
the one side of the first electrode plate (110) corresponding to a first side of the first electrode plate (110) on which the first electrode tap (112) is located, and the other side of the first electrode plate (110) corresponding to a second side of the first electrode plate (110) on which the first electrode tap (112) is not located.

7. The secondary battery (10) according to any preceding claim, wherein a separation distance (A) from one side of the second electrode plate (120) to the central region (140_1, 150_1) is greater than a separation distance (A') from another side of the second electrode plate (120) to the central region (140_1, 150_1),
the one side of the second electrode plate (120) corresponding to a first side of the second electrode plate (120) on which the second electrode tap (122) is located, and the other side of the second electrode plate (120) corresponding to a second side of the second electrode plate (120) on which the second electrode tap (122) is not located.

8. The secondary battery (10) according to any preceding claim, wherein the first electrode tap (112) and the second electrode tap (122) are located on different side surfaces of the electrode assembly (100) from each other.

9. The secondary battery (10) according to any one of claims 1 to 7, wherein the first electrode tap (112) and the second electrode tap (122) are located on the same side surface of the electrode assembly (100) as each other.

10. The secondary battery (10) according to any preceding claim, wherein the fillers (144, 154) comprise at least one of polyimide, polyethylene terephthalate, polyethylene, a thermoplastic polyurethane, polyvinylide fluoride, or ethylene-vinyl acetate.

11. The secondary battery (10) according to any preceding claim, wherein the fillers (144, 154) are symmetrically located with each other with respect to the central region (140_1, 150_1).

12. The secondary battery (10) according to any preceding claim, wherein a length of the fillers (144, 154) is greater than or equal to a height of the first electrode plate (110) and less than or equal to a height of the second electrode plate (120).

13. The secondary battery (10) according to any one of claims 7 to 12, wherein a width of the fillers (144, 154) is less than or equal to the separation distance (A) from the one side of the second electrode plate (120) to the central region (140_1, 150_1).

14. The secondary battery (10) according to any preceding claim, wherein a length of the fillers (148, 158) is greater than or equal to the length of the first electrode plate (110) and less than or equal to the length of the second electrode plate (120).

15. The secondary battery (10) according to any preceding claim, wherein the electrode assembly (110) further comprises a filler (146, 156) in the central region (140_1, 150_1).
